# EUROPEAN PATENT APPLICATION

(11) **EP 4 847 454 A1**
(43) Date of publication of application: **02.12.2026**
(21) Application number: 25222250.0
(22) Date of filing: 10.12.2025
(51) Int. Cl.: C02F 1/52, C02F 1/66, C22B 3/20, C22B 3/44, C22B 3/00, C02F 101/20, C02F 103/08, C02F 103/10, C02F 1/00, C02F 1/02, C02F 1/28

(54) **METHOD AND SYSTEM FOR PURIFYING A MAGNESIUM SULFATE SOLUTION**

(30) Priority: 30.05.2025 CN 202510718147
(71) Applicant: China Enfi Engineering Corporation, Beijing 100038 (CN); CHINA ENFI ENGINEERING CO., LTD., Beijing 100038 (CN)
(72) Inventor: CAO, Min, Beijing, E-100038 (CN); FU, Guoyan, Beijing, E-100038 (CN); ZHANG, Yang, Beijing, E-100038 (CN); SUN, Ninglei, Beijing, E-100038 (CN); DING, Jian, Beijing, E-100038 (CN); HAN, Guoqiang, Beijing, E-100038 (CN); FU, Junjian, Beijing, E-100038 (CN); WANG, Shuchan, Beijing, E-100038 (CN); MO, Jiaqi, Beijing, E-100038 (CN); LIU, Guo, Beijing, E-100038 (CN)
(74) Representative: ABG Intellectual Property Law, S.L.

(57) **Abstract**

The present application discloses a method and system for purifying a magnesium sulfate solution. The method comprises: pretreating a magnesium sulfate solution containing nickel and cobalt impurities to remove suspended matters and organic matters therein; adding sodium hydrosulfide to the pretreated magnesium sulfate solution, so that nickel and cobalt react with sodium hydrosulfide respectively to generate a precipitate, and performing solid-liquid separation to obtain a purified magnesium sulfate solution and a precipitate containing nickel sulfide and cobalt sulfide; evaporating and crystallizing the purified magnesium sulfate solution to obtain magnesium sulfate crystals, and then drying to obtain a magnesium sulfate product; and post-treating the precipitate containing nickel sulfide and cobalt sulfide to recover nickel and cobalt therein. The present disclosure can efficiently remove nickel and cobalt impurities from magnesium sulfate solution, has the advantages of high efficiency, environmental protection, resource recyclable and the like, can reduce production cost and improve resource utilization rate.

## Description

### Field of the invention

The present disclosure relates to the technical field of wastewater treatment, in particular to a method and system for purifying a magnesium sulfate solution.

### Background of the invention

Magnesium sulfate solution is widely used in many industrial fields such as chemical industry, medicine and agriculture. However, the solution often contains impurities such as nickel and cobalt. For example, magnesium sulfate waste solution generated in the production process of nickel sulfate, has a magnesium content of about 50 g/L and at the same time contains certain concentrations of cobalt ions (such as < 100 mg/L) and nickel ions (such as < 100 mg/L). The presence of these impurities will affect the quality and the subsequent application effects of magnesium sulfate. For example, in the field of medicine, the presence of impurities may affect the safety and effectiveness of medicines; in the electronics industry, the requirement for the purity of magnesium sulfate solution is extremely high, and impurities may lead to degradation of product performance. Therefore, it is of great practical significance to purify the magnesium sulfate solution to remove nickel and cobalt impurities.

The traditional magnesium sulfate solution purification method mainly adopts an alkali precipitation method, and nickel and cobalt ions are generated into hydroxide precipitates by adding alkali substances such as sodium hydroxide. This method has obvious disadvantages: firstly, the alkali consumption is large, resulting in increased production cost; secondly, a large amount of waste residues are generated, and these waste residues contain heavy metals, which will cause serious pollution to the environment if treated improperly; thirdly, the treatment efficiency is low, and it is difficult to remove nickel and cobalt impurities to higher purity requirements, which cannot meet the preparation requirements of high-purity magnesium sulfate solutions. Although the ion exchange method has certain advantages, it has high cost and strict equipment requirements. Therefore, it is of great significance to develop an efficient, low-cost and environmentally friendly method for purifying nickel and cobalt from a magnesium sulfate solution.

In addition, the Experimental study on the purification and impurity removal of a magnesium sulfate solution, MA Liyan et al., Hydrometallurgy, 2011, 30(4), 332-335, used a neutralization hydrolysis method and a sodium carbonate precipitation method to purify the magnesium sulfate solution, but it prepared a high-purity alkali magnesium carbonate instead of a high-purity magnesium sulfate product.

### Detailed description of invention

According to an embodiment of the present disclosure, an object of the present disclosure is to provide a method and system for purifying a magnesium sulfate solution, so as to solve the problems of large alkali consumption, excessive waste residue generation, low processing efficiency, difficulty in meeting environmental protection and resource recovery requirements in the existing methods for purifying a magnesium sulfate solution.

The foregoing objective may be implemented by using the following embodiments of the technical solutions.

According to an aspect of the present disclosure, a method for purifying a magnesium sulfate solution provided by the present disclosure, comprises the following steps:
- pretreating a magnesium sulfate solution containing nickel and cobalt impurities to remove suspended matters and organic matters therein;
- adding sodium hydrosulfide to the pretreated magnesium sulfate solution, controlling pH value of the solution to be 6.5-7.5, stirring so that nickel and cobalt react with sodium hydrosulfide respectively to generate a precipitate, and performing solid-liquid separation to obtain a purified magnesium sulfate solution and a precipitate containing nickel sulfide and cobalt sulfide;
- evaporating and crystallizing the purified magnesium sulfate solution to obtain magnesium sulfate crystals, and then drying to obtain a magnesium sulfate product;
- post-treating the precipitate containing nickel sulfide and cobalt sulfide to recover nickel and cobalt therein.

Optionally, in the step of pretreating the magnesium sulfate solution containing nickel and cobalt impurities, the magnesium sulfate solution is filtered through a quartz sand filter and an activated carbon filter in sequence.

Optionally, in the quartz sand filter, filter material has a particle size of 0.5-4 mm, and a porosity of 40%-45%.

Optionally, in the activated carbon filter, filter material type is coconut shell activated carbon, with a particle size range of 1.0-2.0 mm and a filling height of 1000-1500 mm. Optionally, when filtering the magnesium sulfate solution with the activated carbon filter, the flow rate is controlled at 1-2 m/h.

Optionally, in the activated carbon filter, the coconut shell activated carbon is activated carbon after alkaline treatment.

Optionally, the sodium hydrosulfide is added in an amount of 1.5-2.5 times the theoretical equivalent of the total content of nickel and cobalt in the magnesium sulfate solution.

Optionally, in the step of stirring so that nickel and cobalt react with sodium hydrosulfide respectively to generate a precipitate, the reaction temperature is 20-50°C, the stirring speed is 100-300 r/min, and the reaction time is 0.5-2 hours.

Optionally, the magnesium sulfate product is a high-purity magnesium sulfate product.

Optionally, the temperature for evaporating and crystallizing is controlled at 50-70°C; and the temperature of drying is controlled at 60-100°C.

Optionally, before the step of evaporating and crystallizing the purified magnesium sulfate solution, the method further comprises: detecting the purified magnesium sulfate solution to ensure that the contents of nickel and cobalt are both less than 1.0 mg/L.

Optionally, treating the precipitate containing nickel sulfide and cobalt sulfide by an acid leaching method to recover nickel and cobalt therein, under the conditions of acid-ore ratio of 500-900 kg/t, stirring time of 1-3 h, liquid-solid ratio of 4-8:1, temperature of 80-95°C, and stirring speed of 300-800 r/min.

Optionally, an auxiliary reagent is added while adding sodium hydrosulfide to the pretreated magnesium sulfate solution, and the auxiliary reagent is one or more selected from the group consisting of a surfactant and a complexing agent.

According to one aspect of the present disclosure, a system for purifying a magnesium sulfate solution provided by the present disclosure, comprising:
- a pretreatment unit, for pretreating a magnesium sulfate solution containing nickel and cobalt impurities to remove suspended matters and organic matters therein;
- a sodium hydrosulfide purification unit, for adding sodium hydrosulfide to the pretreated magnesium sulfate solution, controlling pH value of the solution to be 6.5-7.5, and stirring to react nickel and cobalt with sodium hydrosulfide respectively to generate a precipitate;
- a precipitation separation unit, for performing solid-liquid separation on the material obtained by the sodium hydrosulfide purification unit to obtain a purified magnesium sulfate solution and a precipitate containing nickel sulfide and cobalt sulfide;
- a crystallization and drying unit, for evaporating and crystallizing the purified magnesium sulfate solution to obtain magnesium sulfate crystals, and then drying to obtain a magnesium sulfate product;
- a post-treating unit, for post-treating the precipitate containing nickel sulfide and cobalt sulfide to recover nickel and cobalt therein.

Beneficial effects: the method and system for purifying a magnesium sulfate solution provided according to an embodiment of the present disclosure can efficiently remove nickel and cobalt impurities in the magnesium sulfate solution, reduce the use of alkali in a conventional precipitation method, reduce the amount of waste residue generated, realize environmental protection treatment and resource recovery, realize the effective removal of nickel and cobalt impurities in the magnesium sulfate solution, prepare high-purity magnesium sulfate products, and meet the needs of industrial production for high-purity magnesium sulfate.

Compared with the prior art, some embodiments of the present disclosure further have the following advantages:
1) Environmentally friendly and efficient: sodium hydrosulfide is used as a purifying agent, which avoids the use of a large amount of alkali in traditional methods, reduces the generation of waste residues, and reduces the risk of environmental pollution. The formation efficiency of sulfide precipitation is high, enabling rapid removal of nickel and cobalt impurities and improving treatment efficiency. By controlling the pH value within an appropriate range, not only the effective dissociation of sodium hydrosulfide can be ensured, but also the generation of hydrogen sulfide gas can be avoided, thereby reducing environmental pollution. Through the synergistic treatment mechanism of pretreatment-sodium hydrosulfide precipitation, the nickel and cobalt ions in the magnesium sulfate solution can be effectively removed, and the precipitation efficiency is improved, that is, the solution purification efficiency is improved.
2) High purity product: through pretreatment and sodium hydrosulfide purification processes, nickel and cobalt impurities in magnesium sulfate solution can be removed to extremely low levels, resulting in high-purity magnesium sulfate solution (purity ≥ 99.5), meeting the application requirements of high-end industrial fields.
3) Process optimization: the whole process flow is designed integrally, from pretreatment to crystallization drying, the steps are tightly connected, the operation is simple, industrial continuous production can be realized, the production efficiency is improved, and the production cost is reduced. In some preferred embodiments, pretreatment is carried out by quartz sand filtration and activated carbon filtration in sequence to remove suspended matters and organic matters. After purification, acid leaching post-treatment is carried out on the residue to realize recovery and reuse of nickel and cobalt. Combined with evaporation crystallization and drying steps, an integrated process from purification to preparation of high-purity products is achieved, improving production efficiency and forming a complete purification process.
4) Resource recovery: the nickel and cobalt sulfides precipitate obtained by precipitation separation can be further processed to realize the recovery and reuse of nickel and cobalt, which improves the resource utilization rate and reduces the production cost. For example, nickel and cobalt metals are recovered by an acid leaching method to realize the recycling of resources and improve the resource utilization rate.
5) Cost reduction: compared with some complex processes such as ion exchange, sodium hydrosulfide used in this application has a relatively low price, mild reaction conditions, and low equipment requirements, thereby greatly reducing processing costs. Meanwhile, by controlling the reaction conditions, the excessive use of the agent can be reduced, and the cost can be further saved.

### Best Mode

In order to better illustrate the present disclosure and facilitate understanding of the technical solutions of the present disclosure, the present disclosure is further described in detail below. Apparently, the following embodiments are merely some but not all of the embodiments of the present disclosure. The following description of at least one exemplary embodiment is merely illustrative in nature and should not be construed as any limitation on the present disclosure and its applications or uses. All other embodiments obtained by a person of ordinary skill in the art based on the embodiments of the present disclosure without creative efforts shall fall within the protection scope of the present disclosure.

The present disclosure provides a method for purifying a magnesium sulfate solution, which adopts the system for purifying a magnesium sulfate solution provided by the present disclosure for purification, the system comprises a pretreatment unit, a sodium hydrosulfide purification unit, a precipitation separation unit, a crystallization and drying unit and a post-treatment unit, and the method comprises: pretreating a magnesium sulfate solution containing nickel and cobalt impurities to remove suspended matters and organic matters therein; adding sodium hydrosulfide to the pretreated magnesium sulfate solution, so that nickel and cobalt react with sodium hydrosulfide respectively to generate a precipitate, and performing solid-liquid separation to obtain a purified magnesium sulfate solution and a precipitate containing nickel sulfide and cobalt sulfide; evaporating and crystallizing the purified magnesium sulfate solution to obtain magnesium sulfate crystals, and then drying to obtain a magnesium sulfate product; and post-treating the precipitate containing nickel sulfide and cobalt sulfide to recover nickel and cobalt therein.

Through the synergistic treatment mechanism combined with pretreatment and sodium hydrosulfide purification, the nickel and cobalt impurities in the magnesium sulfate solution can be efficiently removed, the purity requirements of the high-purity magnesium sulfate solution are met, and the problems of environmental pollution, high waste residue treatment cost and low treatment efficiency caused by the large use of alkali in the prior art are solved. It has the advantages of high efficiency, environmental protection, resource recyclable, etc., can reduce production costs and improve resource utilization rate, and has broad application prospects. The above method is suitable for the purification treatment of various magnesium sulfate solutions containing nickel and cobalt impurities, for example, magnesium sulfate waste solution generated in the production process of nickel sulfate as a battery raw material. The purified magnesium sulfate solution of the present disclosure meets the quality requirements of high-purity magnesium sulfate products. By evaporating and crystallizing the purified magnesium sulfate solution, high-purity magnesium sulfate crystals are obtained. Through drying treatment, high-purity magnesium sulfate products are obtained. This is particularly suitable for industrial production processes that require the preparation of high-purity magnesium sulfate. In addition, by optimizing the process parameters of each step, the purification efficiency and product quality can be further improved, and the specific content will be described in detail in the following embodiments.

In the present disclosure, the magnesium sulfate solution is pretreated before the purification with sodium hydrosulfide. For example, quartz sand filters, activated carbon filters, ultrafiltration membrane filtration, and microfiltration membrane filtration are used to remove suspended matters, organic matters and other impurities therein, so as to provide good water inlet conditions for subsequent purification treatment.

In some preferred embodiments, the magnesium sulfate solution is pretreated with a quartz sand filter and an activated carbon filter in sequence. Through physical filtration and adsorption, impurities such as suspended matters and organic matters in the magnesium sulfate solution can be effectively removed, which prevents these impurities from affecting the subsequent purification reaction, and provides a clean solution environment for the sodium hydrosulfide purification step. The inventors of the present application have deeply analyzed the magnesium sulfate solution and the existence form of nickel and cobalt therein, and realized that the magnesium sulfate solution (especially obtained from salt-lake brine, seawater magnesium extraction or industrial by-products) may contain two types of key impurities, namely mechanical impurities and organic/polar impurities. Among them, the solid particle residues of mechanical impurities such as undissolved Mg(OH)₂ particles, aluminosilicate colloids, ore debris, etc., will hinder sulfide (NiS/CoS) crystallization (forming colloidal suspensions). The presence of organic/polar impurities: such as humic acid, surfactant residues, organic ligands complexed with nickel and cobalt, etc., will complex nickel and cobalt ions, and nickel and cobalt ions are difficult to directly precipitate only by sodium hydrosulfide after being complexed, which reduces the precipitation efficiency of sodium hydrosulfide. Based on this, in a preferred embodiment of the present disclosure, the suspended matters are trapped by the particle gaps of the quartz sand first, the mechanical impurities are selectively removed, and then the organic/polar impurities in the solution are adsorbed by using the adsorption effect of the activated carbon (so that the nickel and cobalt are mainly the free ions Ni²⁺/Co²⁺), the two types of key impurities affecting the precipitation of the nickel and cobalt in the magnesium sulfate solution are accurately removed through the above-mentioned two-stage filtration, the turbidity of the solution is controlled to be ≤ 1 NTU, a "clean liquid phase environment" is provided for the subsequent precipitation, so that the sulfide is directly precipitated in a crystalline state, and colloid generation and the waste of precipitants are avoided. In addition, the magnesium sulfate solution is weakly acidic and contains Cl⁻, and the use of the quartz sand filter and the activated carbon filter can avoid the problems that the conventional equipment has a short service life in the magnesium sulfate solution and is prone to introduce impurities such as Fe²⁺/Cu²⁺.

Preferably, in the quartz sand filter, the quartz sand filter material has a micron-sized particle size of 0.5-4 mm and a porosity of 40%-45%. By using the filter material with the specific particle size and porosity, it is ensured that the particles of ≥ 5µm are removed, avoiding the large particles from blocking the subsequent activated carbon channels.

Preferably, in the activated carbon filter, the type of the filter material is coconut shell activated carbon with a high specific surface area, a particle size range of 1.0-2.0 mm and a filling height of 1000-1500 mm, which can further improve the adsorption effect on organic/polar impurities. Further preferably, the activated carbon is filtered with a small flow rate, for example, the flow rate is controlled at 1-2 m/h, so that the contact time is prolonged to fully adsorb the complexed impurities. Further preferably, the activated carbon may be subjected to alkaline treatment, for example, modified by soaking with NaOH, to enhance the adsorption towards acidic organic ligands. More specifically, when the activated carbon is modified with NaOH, 20 wt% of NaOH is used, the mass ratio of the activated carbon to the NaOH solution is 1:5-1:10, and the soaking time is 12-24 h.

By optimizing the parameters etc. in the pretreatment steps of the quartz sand filter and the activated carbon filter respectively, the turbidity of the solution can be further reduced, and the pretreatment effect can be improved.

Further, the quartz sand filter adopts a multi-level configuration, and based on the porosity, the retention efficiency of suspended matters can be ≥ 95%. Bottom layer coarse sand (as a support layer): 2.0-4.0 mm, thickness: 100-150 mm; middle layer medium sand (as a filter layer): 0.8-1.2 mm, thickness: 500-800 mm; top layer fine sand (surface layer filtration): 0.5-0.8 mm, thickness: 200-300 mm. Quartz sand filter material type: refined quartz sand, wherein the content of SiO₂ is ≥ 99%, the mud content is < 0.5%, and there are no impurity particles. Pretreatment with the above specific quartz sand filter and activated carbon filter can control the turbidity of the solution at ≤ 0.3 NTU, creating more favorable conditions for subsequent precipitation.

In the present disclosure, sodium hydrosulfide is used as a purifying agent, and a pretreatment-sodium hydrosulfide precipitation synergistic treatment mechanism is used, thereby improving the solution purification efficiency. Compared with other sulfides, sodium hydrosulfide can precipitate nickel and cobalt ions with high selectivity without introducing other impurities, and has the advantages of high selectivity, high safety and low cost. Sodium hydrosulfide is used as a purifying agent, nickel and cobalt react with sodium hydrosulfide respectively to generate precipitates, and then solid-liquid separation is performed to purify the magnesium sulfate solution, which avoids the use of a large amount of alkali in the traditional method, reduces the generation of waste residues, and reduces the risk of environmental pollution.

The purification principle of sodium hydrosulfide: under weak acidic to neutral conditions, sodium hydrosulfide dissociates to produce hydrogen sulfide ions (HS⁻), nickel ions (Ni²⁺) and cobalt ions (Co²⁺) react with hydrogen sulfide ions to produce nickel sulfide (NiS) and cobalt sulfide (CoS) precipitates, and the reaction equation is as follows:

Ni²⁺+HS⁻ → NiS↓+H⁺

Co²⁺+HS⁻ → CoS↓+H⁺.

The inventors of the present application have noticed that sodium hydrosulfide (NaHS) is dissociated into Na⁺, and HS⁻ in aqueous solution, HS⁻ can be further weakly dissociated into H⁺ and S²⁻, and the release of S²⁻ is more controllable. Based on this, the inventors achieved selective precipitation by controlling the release rate of sulfur ions, which means highly selective removal of nickel and cobalt while retaining magnesium, avoiding the introduction of new impurities and meeting the stringent requirements for purifying magnesium sulfate solutions.

In some preferred embodiments, by adjusting the pH of the solution in a range from weak acidic to neutral, the concentration of S²⁻ can be maintained in a range where only nickel and cobalt can be precipitated without magnesium precipitation, and based on the dissociation characteristics of sodium hydrosulfide, selective precipitation can be achieved by precisely adjusting the pH.

Preferably, when sodium hydrosulfide is used for purification, the pH value of the solution is controlled between 6.5-7.5, such as 6.5, 7.0, 7.5, etc. By controlling the pH value within the above appropriate range, not only the effective dissociation of sodium hydrosulfide can be ensured, but also the generation of hydrogen sulfide gas can be avoided, thereby reducing environmental pollution. The inventors of the present application have found that: if the pH value is too high, for example, when the pH value is > 7.5, HS- dissociation is aggravated, and S2- suddenly increases, resulting in Mg2+ precipitation and magnesium loss; excess S²⁻ is combined with H⁺ to generate HS-, which reduces the effective utilization rate of sodium hydrosulfide; sulfide precipitation particles are refined into colloids, which are difficult to filter, and the residual amount of nickel and cobalt is increased reversely. If the pH value is too low, for example, < 6.5, the H2S gas escapes, the concentration of sulfur ions is insufficient, and the removal rate of nickel and cobalt decreases; and under this acidic condition, Ni2+/Co2+ may form complex ions with the residual Cl- in the solution, which will inhibit the sulfide precipitation; the Mg2+ hydrolysis in the magnesium sulfate solution is aggravated, and the generated Mg(OH)2 colloids are mixed with the sulfide precipitates, resulting in the "hetero-crystal wrapping" phenomenon in the subsequent crystallization process.

In some preferred embodiments, based on the dissociation characteristics of sodium hydrosulfide, the addition amount of NaHS and the above reaction pH are controlled to avoid the problem of co-precipitation of Mg²⁺ due to the excessive concentration of S²⁻, thereby further improving the purification efficiency.

Preferably, when sodium hydrosulfide is used for purification, the addition amount of sodium hydrosulfide is 1.5-2.5 times the theoretical equivalent of the total content of nickel and cobalt in the magnesium sulfate solution. The inventors of the present application have found that: excessive sodium hydrosulfide can lead to excessive concentration of S²⁻, causing magnesium precipitation and H₂S gas release, and insufficient sodium hydrosulfide can lead to incomplete removal of nickel and cobalt. The above sodium hydrosulfide is slightly excessive, taking into account the reaction kinetics (complete precipitation of nickel and cobalt) and selectivity (avoiding magnesium loss). Based on the above pH range, by further optimizing the addition amount of sodium hydrosulfide, the effectively dissociated hydrogen sulfide ions completely precipitate the nickel ions and cobalt ions in the magnesium sulfate solution, thereby improving the purification efficiency and product quality. In addition, in the raw material preparation stage, a sodium hydrosulfide solution with a concentration of 20-35 wt.% may be prepared for ease of use.

The inventors of the present application have realized that the sulfide precipitation process follows the kinetics of "nucleation-growth", and in some preferred embodiments, by controlling the reaction temperature, the purification efficiency is improved, and the product quality is improved.

Preferably, when sodium hydrosulfide is used for purification, the reaction temperature is controlled at 20-50°C, such as 20°C, 25°C, 30°C, 35°C, 40°C, 45°C, 50°C, etc. If the temperature is too low, it will reduce the reaction rate and form fine colloidal particles, which are difficult to filter; and if the temperature is too high, it may lead to the volatilization of H₂S, and at the same time affect the stability of magnesium sulfate, and even initiate side reactions.

Further, the reaction time may be controlled to be 0.5-2 hours, such as 0.5 hours, 1 hour, 1.5 hours, or 2 hours. Further, the reaction is carried out by stirring at a stirring speed of 100-300 r/min, such as 100 r/min, 150 r/min, 200 r/min, 250 r/min, or 300 r/min.

In some preferred embodiments of the present disclosure, based on the purification principle of sodium hydrosulfide, the purification efficiency and product quality are further improved by further optimizing the reaction mode and reaction temperature. In addition, compared with some complex processes such as ion exchange, the sodium hydrosulfide used in the present disclosure is relatively low in price, mild in reaction conditions, and low in equipment requirements, which greatly reduces the treatment cost; meanwhile, by controlling the reaction conditions, the excessive use of the agent can be reduced, and the cost is further saved.

In some preferred embodiments, sodium hydrosulfide is used as a purifying agent while an auxiliary reagent is added to form a synergistic purification effect. The auxiliary reagent may be one or more selected from the group consisting of a surfactant and a complexing agent. Surfactants such as polyethylene glycol can promote the agglomeration of sulfide particles and reduce colloid residue. Complexing agents such as citric acid can preferentially complex magnesium ions, further inhibit their reaction with S²⁻, and enhance selectivity. It should be noted that the addition amount of the auxiliary reagent is not limited herein, and may be specifically adjusted according to the above principle of action. Exemplarily, for example, 0.02 g/L to 0.08 g/L of surfactant is added while sodium hydrosulfide is added.

After the purification reaction, the density difference between the precipitate of nickel sulfide and cobalt sulfide and the magnesium sulfate solution may be used to make the precipitates settle and aggregate at the bottom by standing. Further, it may be allowed to stand for 30-60 min, such as 30 min, 40 min, 50 min, or 60 min, and then the precipitate is separated from the solution by solid-liquid separation method, such as filtration or centrifugation, to obtain a magnesium sulfate solution with nickel and cobalt removed (i.e., a purified magnesium sulfate solution) and a precipitate containing nickel sulfide and cobalt sulfide. The filtration may be performed by an equipment such as a plate and frame filter press, the centrifugation may be performed by a centrifuge, and an appropriate separation method is selected according to the production scale and actual requirement. In addition, the solid-liquid separation method may also adopt other solid-liquid separation methods such as air flotation method (by introducing gas into the solution, the precipitate is attached to the bubbles to float up) to achieve solid-liquid separation.

In addition, before evaporation and crystallization, the purified magnesium sulfate solution may be detected to ensure that the content of nickel and cobalt reaches the expected standard, for example, to ensure that the content of both cobalt and nickel in the purified magnesium sulfate solution is less than 1.0 mg/L, so as to meet the requirements of subsequent evaporation and crystallization processes.

In a preferred embodiment, when the magnesium sulfate product is prepared from the purified magnesium sulfate solution, it is first evaporated and crystallized, and then dried. Preferably, the temperature of the evaporation and crystallization is controlled at 50-70°C, such as 50°C, 60°C, or 70°C, so as to avoid the dehydration of MgSO₄·7H₂O caused by high temperature (the crystal water begins to be lost above 70°C), while suppressing the co-crystallization of Na⁺ (the solubility of Na₂SO₄ significantly increases with the increase of temperature). In addition, the drying temperature may be controlled at 60-100°C, such as 60°C, 80°C, or 100°C. By controlling the evaporation and crystallization conditions, the quality of the magnesium sulfate product is further improved, and the purification is combined with the crystallization and drying steps, so that an integrated process from purification to preparation of high-purity products is realized, and the production efficiency is improved.

Further, vacuum evaporation is used to reduce the boiling point of the solution, realize low-temperature evaporation, protect the crystal hydration structure, and reduce the volatilization of H₂S residual gas. Further, the vacuum degree may be controlled to be -0.08 MPa to -0.09 MPa.

In the present disclosure, it can recover the nickel and cobalt metals from the precipitate containing nickel sulfide and cobalt sulfide obtained by precipitation separation through further post-treatment, thereby realizing the recycling of resources and improving the resource utilization rate.

In some preferred embodiments, in the step of post-treating the precipitate containing nickel sulfide and cobalt sulfide, an acid leaching treatment method is adopted to recover the nickel and cobalt metals therein, so as to realize the recycling of resources, improve the resource utilization rate, and reduce the production cost.

Further, the acid-ore ratio is 500-900 kg/t, such as 500 kg/t, 600 kg/t, 700 kg/t, 800 kg/t, or 900 kg/t; stirring is carried out for 1-3 h; the liquid-solid ratio is 4-8:1, such as 4:1, 5:1, 6:1, 7:1, or 8:1; the temperature is 80-95°C, such as 80°C, 85°C, 90°C, or 95°C; and the stirring speed is 300-800 r/min. By controlling the acid leaching conditions, efficient recovery of nickel and cobalt metals is achieved.

The technical solutions of the present disclosure will be clearly and completely described below with reference to the embodiments of the present disclosure.

### Example 1

In the magnesium sulfate solution containing nickel and cobalt impurities, the nickel content was 50 mg/L, and the cobalt content was 30 mg/L.

First, filtration was performed through a refined quartz sand filter to remove suspended matters and organic matters. Among them, in the quartz sand filter, the bottom layer coarse sand was 3.0 mm with the thickness of 100 mm; the middle layer medium sand was 1.0 mm with the thickness of 600 mm; and the top layer fine sand was 0.6 mm with the thickness of 250 mm, so that the porosity was 42%, and the retention efficiency of suspended matters was 98%. Then, a 20 wt% NaOH-treated coconut shell activated carbon filter was used for filtration (wherein when the coconut shell activated carbon filter was treated with NaOH, the wt% ratio of the activated carbon to the NaOH solution was 1:8, soaking was performed for 12 h), the particle size range was 1.5 mm, the filling height was 1200 mm, and the flow rate was controlled at 2 m/h to obtain the pretreated solution.

A sodium hydrosulfide solution with a concentration of 30 wt% was added to the pretreated solution, the addition amount of sodium hydrosulfide was 2 times the theoretical equivalent of the total content of nickel and cobalt, the pH value of the solution was controlled to be 7.0, the reaction temperature was controlled to be 30°C, the reaction was carried out under stirring for 60 min at a stirring speed of 200 r/min, so that nickel and cobalt reacted with sodium hydrosulfide to form a precipitate; the solution after the reaction was allowed to stand for 45 min, so that the precipitate was settled; and then the precipitate was filtered by a plate and frame filter press to separate the precipitate.

The press-filtration residue was treated by an acid leaching treatment method to recover the nickel and cobalt metals therein. Among them, the acid-ore ratio was 600 kg/t, the stirring was carried out for 2 h, the liquid-solid ratio was 6:1, the test temperature was 90°C, the stirring speed was 500 r/min, and the nickel-cobalt recovery rate was 99%.

The treated solution was evaporated and crystallized at 60°C to obtain magnesium sulfate crystals, which were then dried at 80°C to a constant weight to obtain a high-purity magnesium sulfate product.

In the product, the nickel content was 0.1 mg/L, the cobalt content was 0.1 mg/L, and the magnesium loss rate was < 0.15%. The quality requirement of high-purity magnesium sulfate is met.

### Example 2

The difference from Example 1 was that: when the sodium hydrosulfide solution was added to the pretreated solution, the addition amount of sodium hydrosulfide was 1.5 times the theoretical equivalent of the total content of nickel and cobalt, and the pH value of the solution was controlled to be 6.5. The remaining conditions were the same as in Example 1.

In the prepared high-purity magnesium sulfate product, the nickel content was 0.15 mg/L, the cobalt content was 0.2 mg/L, and the magnesium loss rate was < 0.16%, which met the quality requirements of the high-purity magnesium sulfate.

### Example 3

The difference from Example 1 was that: after the sodium hydrosulfide solution was added to the pretreated solution, the reaction temperature was 50°C. The remaining conditions were the same as in Example 1.

In the prepared high-purity magnesium sulfate product, the nickel content was 0.12 mg/L, the cobalt content was 0.19 mg/L, and the magnesium loss rate was < 0.19%, which met the quality requirements of the high-purity magnesium sulfate.

### Example 4

The difference from Example 1 was that: 0.05 g/L of polyethylene glycol was added while the sodium hydrosulfide solution was added to the pretreated solution. The remaining conditions were the same as in Example 1.

In the prepared high-purity magnesium sulfate product, the nickel content was 0.10 mg/L, the cobalt content was 0.14 mg/L, and the magnesium loss rate was < 0.15%, which met the quality requirements of high-purity magnesium sulfate.

### Example 5

The difference from Example 1 was that: when the coconut shell activated carbon filter was treated with NaOH, the wt% ratio of the activated carbon to the NaOH solution was 1:5 and soaking was performed for 24 h; when the NaOH-treated coconut shell activated carbon filter was used for filtration, the flow rate was controlled at 1 m/h. The remaining conditions were the same as in Example 1.

In the prepared high-purity magnesium sulfate product, the nickel content was 0.15 mg/L, the cobalt content was 0.18 mg/L, and the magnesium loss rate was < 0.16%, which met the quality requirements of the high-purity magnesium sulfate.

### Example 6

The difference from Example 1 was that: a coconut shell activated carbon filter without NaOH treatment was used for filtration. The remaining conditions were the same as in Example 1.

In the prepared high-purity magnesium sulfate product, the nickel content was 0.19 mg/L, the cobalt content was 0.21 mg/L, and the magnesium loss rate was < 0.18%, which met the quality requirements of the high-purity magnesium sulfate.

### Comparative Example 1 (Traditional alkali precipitation method)

Sodium hydroxide was used as a precipitant to adjust the pH value of the solution to 9.0, so that nickel and cobalt ions were generated into hydroxide precipitates. After treatment, the nickel content in the solution was 5 mg/L and the cobalt content was 4 mg/L, which were much higher than the purification effect of the embodiments of the present disclosure, and the amount of waste residue generated was large, and the treatment cost was high.

In this comparative example, a large amount of sodium hydroxide was consumed, the amount of sodium hydroxide used was 7.6 times the theoretical equivalent of the total contents of nickel and cobalt, and the production cost was increased; meanwhile, the magnesium was co-precipitated, and the magnesium loss rate was > 20%.

The industrial grade unit price of sodium hydroxide was about 800 yuan/ton, the cost of a single ton of solution reagent was 0.084 yuan, which was 61.54% more than sodium hydrosulfide of the present disclosure (1.5 times the theoretical dosage, and the cost of a single ton of solution reagent was 0.052 yuan).

### Comparative Example 2

The difference from Example 1 was that: after the sodium hydrosulfide solution was added to the pretreated solution, the reaction temperature was 70°C. The remaining conditions were the same as in Example 1.

In the prepared high-purity magnesium sulfate product, the nickel content was 0.16 mg/L, the cobalt content was 0.17 mg/L, and the magnesium loss rate was < 0.89%.

The description of the present disclosure has been presented for purposes of illustration and description, and is not exhaustive or limited to the disclosed form. Many modifications and variations will be apparent to those of ordinary skill in the art. The examples are chosen and described in order to better explain the principles of the present disclosure and its practical application, and to enable those of ordinary skill in the art to understand the disclosure, thereby designing various embodiments with various modifications suitable for specific purposes.

## Claims

1. A method for purifying a magnesium sulfate solution, **characterized in** comprising:
• pretreating a magnesium sulfate solution containing nickel and cobalt impurities to remove suspended matters and organic matters therein;
• adding sodium hydrosulfide to the pretreated magnesium sulfate solution, controlling pH value of the solution to be 6.5-7.5, stirring so that nickel and cobalt react with sodium hydrosulfide respectively to generate a precipitate, and performing solid-liquid separation to obtain a purified magnesium sulfate solution and a precipitate containing nickel sulfide and cobalt sulfide;
• evaporating and crystallizing the purified magnesium sulfate solution to obtain magnesium sulfate crystals, and then drying to obtain a magnesium sulfate product;
• post-treating the precipitate containing nickel sulfide and cobalt sulfide to recover nickel and cobalt therein.

2. The method for purifying a magnesium sulfate solution according to claim 1, **characterized in that** in the step of pretreating the magnesium sulfate solution containing nickel and cobalt impurities, the magnesium sulfate solution is filtered through a quartz sand filter and an activated carbon filter in sequence.

3. The method for purifying a magnesium sulfate solution according to claim 2, **characterized in that**
in the quartz sand filter, filter material has a particle size of 0.5-4 mm, and a porosity of 40%-45%;
in the activated carbon filter, filter material type is coconut shell activated carbon, with a particle size range of 1.0-2.0 mm and a filling height of 1000-1500 mm;
when filtering the magnesium sulfate solution with the activated carbon filter, the flow rate is controlled at 1-2 m/h.

4. The method for purifying a magnesium sulfate solution according to claim 3, **characterized in that** in the activated carbon filter, the coconut shell activated carbon is activated carbon after alkaline treatment.

5. The method for purifying a magnesium sulfate solution according to claim 1, **characterized in that** the sodium hydrosulfide is added in an amount of 1.5-2.5 times the theoretical equivalent of the total content of nickel and cobalt in the magnesium sulfate solution.

6. The method for purifying a magnesium sulfate solution according to claim 1, **characterized in that** in the step of stirring so that nickel and cobalt react with sodium hydrosulfide respectively to generate a precipitate, the reaction temperature is 20-50°C, the stirring speed is 100-300 r/min, and the reaction time is 0.5-2 hours.

7. The method for purifying a magnesium sulfate solution according to claim 1, **characterized in that** the magnesium sulfate product is a high-purity magnesium sulfate product.

8. The method for purifying a magnesium sulfate solution according to claim 1, **characterized in that** the temperature for evaporating and crystallizing is controlled at 50-70°C; and the temperature of drying is controlled at 60-100°C.

9. The method for purifying a magnesium sulfate solution according to claim 1, **characterized in that**
before the step of evaporating and crystallizing the purified magnesium sulfate solution, the method further comprises: detecting the purified magnesium sulfate solution to ensure that the contents of nickel and cobalt are both less than 1.0 mg/L; and
treating the precipitate containing nickel sulfide and cobalt sulfide by an acid leaching method to recover nickel and cobalt therein, under the conditions of acid-ore ratio of 500-900 kg/t, stirring time of 1-3 h, liquid-solid ratio of 4-8:1, temperature of 80-95°C, and stirring speed of 300-800 r/min.

10. The method for purifying a magnesium sulfate solution according to claim 1, **characterized in that** an auxiliary reagent is added while adding sodium hydrosulfide to the pretreated magnesium sulfate solution, and the auxiliary reagent is one or more selected from the group consisting of a surfactant and a complexing agent.

11. A system for purifying a magnesium sulfate solution used for the method for purifying a magnesium sulfate solution according to any one of claims 1-10, **characterized in that** the system comprises:
• a pretreatment unit, for pretreating a magnesium sulfate solution containing nickel and cobalt impurities to remove suspended matters and organic matters therein;
• a sodium hydrosulfide purification unit, for adding sodium hydrosulfide to the pretreated magnesium sulfate solution, controlling pH value of the solution to be 6.5-7.5, and stirring to react nickel and cobalt with sodium hydrosulfide respectively to generate a precipitate;
• a precipitation separation unit, for performing solid-liquid separation on the material obtained by the sodium hydrosulfide purification unit to obtain a purified magnesium sulfate solution and a precipitate containing nickel sulfide and cobalt sulfide;
• a crystallization and drying unit, for evaporating and crystallizing the purified magnesium sulfate solution to obtain magnesium sulfate crystals, and then drying to obtain a magnesium sulfate product;
• a post-treating unit, for post-treating the precipitate containing nickel sulfide and cobalt sulfide to recover nickel and cobalt therein.
